(19) Europäisches Patentamt
European Patent Office
Office européen des brevets

(11) **EP 4 283 344 A1**

(12) **EUROPEAN PATENT APPLICATION**

(43) Date of publication:
**29.11.2023 Bulletin 2023/48**

(21) Application number: **22275066.3**

(22) Date of filing: **25.05.2022**

(51) International Patent Classification (IPC):
***G01T 3/00*** (2006.01)

(52) Cooperative Patent Classification (CPC):
**G01T 3/005**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BAE SYSTEMS plc
London SW1Y 5AD (GB)**

(72) Inventor: **The designation of the inventor has not
yet been filed**

(74) Representative: **BAE SYSTEMS plc
Group IP Department
Warwick House
P.O. Box 87
Farnborough Aerospace Centre
Farnborough Hampshire GU14 6YU (GB)**

(54) **PORTABLE TIME-OF-FLIGHT FAST NEUTRON SPECTROSCOPY**

(57)    A portable time of flight neutron spectroscopy system 100 comprising a first detector 120 adapted to be positioned at a first distance 130 from a fission source 110, configured to detect a gamma-ray emitted from the fission source 110, a second detector 140 adapted to be positioned at a second distance 150 from the fission source 110, configured to detect a neutron emitted from the fission source 110, and a computer system 160 coupled to the first and second detectors 120, 140, configured to upon detection of a gamma-ray at the first detector 120, record the time of the event and trigger the start of a predetermined time window, upon detection of a neutron at the second detector 140 within the time window, record the time of the event and record the gamma-ray detection and the neutron detection as a coincidence event, using the time difference between the detections of the gamma-ray and the neutron in the coincidence event, determine the time-of-flight of the detected neutron, using the time-of-flight of the detected neutron, determine the energy of the detected neutron.

Fig.1

EP 4 283 344 A1

## Description

FIELD

The present invention relates to a portable time of flight neutron spectroscopy system and method thereof.

BACKGROUND

Time of flight spectroscopy has been used for some time because it is the only method of deterministically measuring the energy spectrum of fast neutron emission, as the measured neutron energy is independent of the amount of energy deposited in the detector. Neutron energy spectra are also commonly measured by unfolding the pulse height spectrum of a detector relying on proton recoil reactions.

Whilst the latter of the two approaches allows for measurements to be made with a single detector, the stochastic nature of recoil reactions and the unfolding process itself mean that the results obtained are reliant on a certain amount of operator skill and interpretation. Furthermore, the unfolding process is very dependent on a good knowledge of the detector efficiency matrix, which adds the requirement of detector characterisation measurements using mono-energetic neutron irradiations.

Although measuring the neutron time of flight offers a deterministic measurement of each individual neutron's energy, it is far from a trivial process. Detecting the neutron at the end of its flight is relatively simple, obtaining a start signal for the timing process, however, is a challenge that has been historically overcome in several ways.

For example, fission chamber measurements detect the moment of fission by depositing the fission source thinly and within a detector volume. This allows the fission fragments, which would not usually penetrate the detector volume, to trigger the timing process. An external neutron detector at a given distance away allows neutron ToF to be measured.

The limitations of this process lie in the requirement of locating the source thinly within the trigger detector, which makes it impractical in many measurement scenarios. It has been useful however in facilitating measurements of the prompt fission neutron spectrum (PFNS) of nuclides for nuclear data purposes and performing detector characterisations.

Accelerator trigger signalling also allows ToF measurements to be made. In this case, the neutron emission from fission induced by accelerator sourced neutrons or $\gamma$-rays can be measured when the start signal is taken from the accelerator itself. This approach has been used to both measure neutron spectra and characterise detectors. The requirement for an accelerator again restricts the technique to laboratory settings and is only useful for measuring induced reactions.

Associated particle ToF uses correlated particle detections to obtain the trigger for ToF measurements, commonly by detecting $\gamma$-rays or neutrons produced during fission events. Using two detectors and adding the capability to measure the time between detections allows correlated pairs of particles to be identified by the nature of their close temporal association. Knowing both the neutron/gamma identity of the detected particles and the time between the detections, ToF spectroscopy can be performed on fission samples. The increased prevalence of digital pulse processing techniques has recently made this approach to ToF spectrum measurements more feasible, and it has been used in the characterisation of detectors and some neutron spectroscopy, both in a lab-based context.

Further to spectral measurements, inverting the technique provides a method for locating a fission source. time of flight measurements from fission sources have been used to perform 3D tomography whereby making an assumption as to the likely peak energy in the neutron spectrum, the time of flight can be used to determine the distance between the source and the detector. Repeating the process with different detector locations across multiple measurements allows the source to be located in 3D space.

Time of flight (ToF) neutron spectrometry has historically required the use of extensive laboratory-based equipment such as accelerators or fission chamber approaches.

It is an objective of the present invention to provide an assembly and method of ToF neutron spectroscopy that may optionally be performed on the fly. It is a further objective of the present invention to provide an assembly and method of ToF fast neutron spectroscopy that reduces the amount of data collected and post-processing required.

SUMMARY

According to an aspect of the present invention, there is provided a portable time of flight neutron spectroscopy system comprising: a first detector adapted to be positioned at a first distance from a fission source, configured to detect a gamma-ray emitted from the fission source; a second detector adapted to be positioned at a second distance from the fission source, configured to detect a neutron emitted from the fission source; and a computer system coupled to the first and second detectors, configured to: upon detection of a gamma-ray at the first detector, record the time of the event and trigger the start of a pre-determined time window; upon detection of a neutron at the second detector within the time window, record the time of the event and record the gamma-ray detection and the neutron detection as a coincidence event; using the time difference between the detections of the gamma-ray and the neutron in the coincidence event, determine the time-of-flight of the detected neutron, and using the time-of-flight of the detected neutron, determine the energy of the detected neutron.

An advantage of the present invention is that an assembly for ToF neutron spectroscopy is provided that is portable. Further advantages of the present invention are that measurements may be performed on the fly and the system may be operated by a person who is not an expert in spectroscopy.

In some examples, the time window may be between 60ns and 250ns. The time window ensures that only related gamma and neutron events are recorded.

In some examples, the first and second detectors may be liquid scintillator detectors and/or solid-state scintillator detectors. In some examples, the first detector may be a solid-state scintillator detector. In some examples, the second detector may be a liquid scintillator detector.

In some examples, the first distance may be between 10mm and 40mm. The first distance of the first detector from the source is such that it is optimal for gamma detection. The distance is close enough such that the gamma detection can be treated as the time of gamma emission but far enough away such that it does not block the path of an emitted neutron to the second detector.

In some examples, the second distance may be between 300mm and 1200mm.

In some examples, the angle $\alpha_1$, of the first detector 120 may be between 5 and 70 degrees. In some examples, the angle $\alpha_2$, of the second detector 140 may be between 5 and 50 degrees.

In some examples, the computer system may further comprise at least one mixed field analyser coupled to the first and second detectors.

In some examples, the computer system may further comprise a field-programmable gate array, such that the mixed field analyser provides fast pulse digitisation via the field-programmable gate array. The field-programmable gate array advantageously allows for a short time resolution of the detectors, to allow for more accurate detection.

In some examples, the computer system may be configured to record multiple gamma-ray detections and neutron detections as multiple coincidence events. Recording multiple detections advantageously allows for a more accurate determination of the energy spectrum of the emitted neutron.

In some examples, the computer system may be further configured to use the multiple coincidence events to produce an energy spectrum.

According to an aspect of the present invention, there is provided a method of performing on the fly time of flight neutron spectroscopy, the method comprising: detecting a gamma-ray emitted from a fission source with a first detector located at a first distance from the fission source; detecting a neutron emitted from the fission source with a second detector located at a second distance from the fission source; wherein the first and second detectors are coupled to a computer system, the computer system configured to: upon detection of a gamma-ray at the first detector, trigger the start of a pre-determined time window; upon detection of a neutron at the second detector within the coincidence window, record the gamma-ray detection and the neutron detection as a coincidence event; from the time between the detections in the coincidence event, determine the time-of-flight of the detected neutron, and from the time-of-flight of the detected neutron, determine the energy of the detected neutron.

An advantage of the present invention is that a method for ToF neutron spectroscopy is provided that may be performed on a desktop, or at multiple different locations. Further advantages of the present invention are that measurements may be performed on the fly and the method may be carried out by a person who is not an expert in spectroscopy.

BRIEF DESCRIPTION OF THE FIGURES

Embodiments of the invention will now be described by way of example only with reference to the figures, in which:

Figure 1 shows an example of the ToF fast neutron spectroscopy system; and

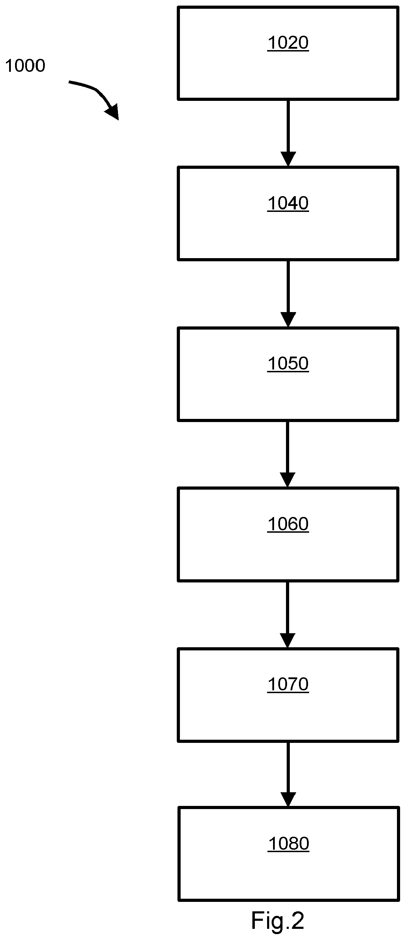

Figure 2 shows a flow chart of an example of the ToF fast neutron spectroscopy method.

DETAILED DESCRIPTION

The present invention uses recent developments in field-programmable gate array (FPGA) based pulse processing capabilities to perform associated particle ToF spectrometry of spontaneous fission as well as describing a technique for discriminating between different fission nuclides. In addition, these measurements are performed on the fly, with correlated particle pairs identified in real-time, reducing the amount of data collected and post-processing required. This gives a portable system capable of deterministically measuring the neutron spectrum of fission samples in real-time, using standard n-$\gamma$ detection equipment.

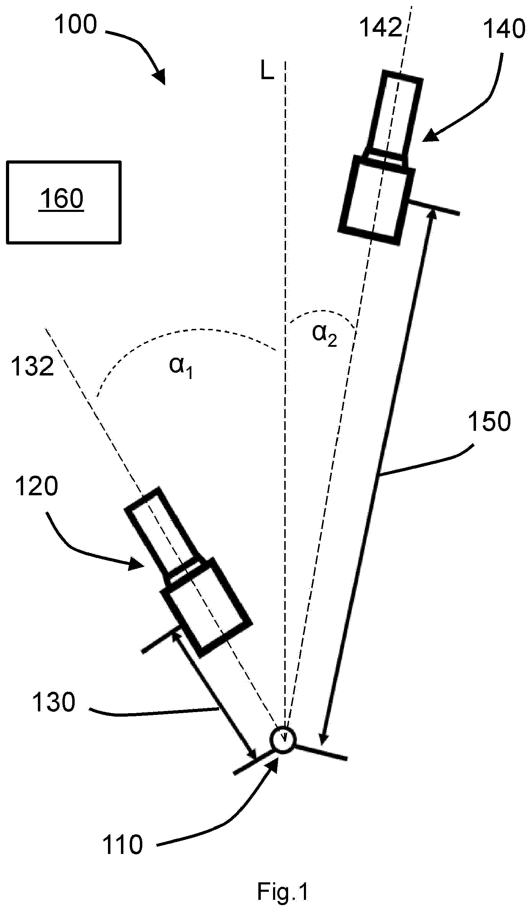

Figure 1 shows an example of the ToF fast neutron spectroscopy system. The system 100 comprises a first detector 120, also known as the trigger detector 120, and a second detector 140, also known as the neutron detector 140. The first detector 120 and second detector 140 are arranged around a source 110. The source 110 may be a fission source 110.

In use, the first detector 120 is positioned at a distance 130 from the source 110 along the first detector axis 132. The first detector 120 is positioned at an angle $\alpha_1$ from a longitudinal axis L, such that the first detector axis 132 is at an angle $\alpha_1$ from a longitudinal axis L.

In use, the second detector 140 is positioned at a distance 150 from the source 110 along the second detector axis 142. The second detector 140 is positioned at an angle $\alpha_2$ from a longitudinal axis L, such that the second detector axis 142 is at an angle $\alpha_2$ from a longitudinal axis L.

As shown in fig. 1, the distance 130 of the first detector 120 from the source 110 is greater than the distance 150 of the second detector 140 from the source 110. That is, the first detector 120 is positioned closer to the source 110 than the second detector 140.

The angle $\alpha_1$ of the first detector 120 is greater than the angle $\alpha_2$ of the second detector. That is, the first detector 120 is positioned at a greater angle from the longitudinal axis L than the second detector 140.

The angle $\alpha_1$, $\alpha_2$ and distance 130, 150 of the detectors 120, 140 from the source 110 are chosen to maximise specific characteristics of the system 100. For example, the distances 130, 150 and angles $\alpha_1$, $\alpha_2$ of the detectors 120, 140 may be adjusted to provide optimal signal strength depending on the type of source 110. The position of the detectors 120, 140 may be adjusted in response to live feedback provided by the computer system 160, which is described in more detail below.

For example, the distance 130 of the first detector 120 from the source 110 may be between 10mm and 400mm. More preferably, the distance 130 may be between 30mm and 350mm. Most preferably, the distance 130 is 300mm. The distance 130 of the first detector 120 from the source 110 is chosen to maximise geometric efficiency but offset so as to not obscure the second detector's 140 line of sight to the source 110. The distance 130 of the first detector 120 from the source 110 is at least 300mm to avoid the highest energy neutrons arriving in the same clock cycle as the small number of gamma-rays that may be misidentified by the particle discrimination algorithm.

For example, the distance 150 of the second detector 140 from the source 110 may be between 300mm and 1200mm. More preferably, the distance 150 may be between 500mm and 1100mm. Most preferably, the distance 130 is 970mm. The distance 150 of the second detector 140 from the source 110 is chosen to provide optimal energy resolution.

For example, the angle $\alpha_1$, of the first detector 120 may be between 5 and 70 degrees. More preferably, the angle $\alpha_1$ may be between 10 and 50 degrees. Most preferably, the angle $\alpha_1$ is 35 degrees.

For example, the angle $\alpha_2$, of the second detector 140 may be between 5 and 50 degrees. More preferably, the angle $\alpha_2$ may be between 10 and 40 degrees. Most preferably, the angle $\alpha_2$ is 25 degrees.

The detectors may be scintillator detectors. The detectors 120, 140 may be liquid scintillator detectors, solid-state scintillator detectors, or a mix of the two. For example, the first detector 120 may be a solid-state scintillator detector and the second detector 140 may be a liquid scintillator detector.

The detectors 120, 140 are sensitive to both gamma-rays ($\gamma$-rays) and neutrons (n) and therefore may detect both products of a single fission event from source 110.

In use, $\gamma$-n correlated pairs are used. That is, events are recorded in which a $\gamma$-ray is detected in the first detector 120 and a neutron in the second detector 140. Travelling at the speed of light, the $\gamma$-ray can be treated as if it has been produced by the source 110 at the moment of detection by the first detector 120 and serves as a marker for the time of fission. Therefore, the time separation between the initial gamma detection by the first detector 120 and the detection of the neutron by the second detector 140 is calculated as the time of flight of the neutron between the point of the fission event 110 and the second detector 140. The time of flight value is used to calculate the energy of the neutron.

The $\gamma$-ray and the neutron produced by the fission source 110 can be assumed to be correlated if they are detected within a certain time window. Said time window is related to the placement of the first detector 120 and second detector 140 with respect to the fission source 110 as well as the expected neutron energy spectrum. The time window may be between 40ns and 80ns. Preferably, the time window may be between 60ns and 500ns. More preferably, the time window may be between 100ns and 300ns. More preferably, the time window may be between 90ns and 275ns. Most preferably, the time window is 250ns. The resolution of the time window is limited by the resolution of a clock in the detectors 120, 140. The resolution of the detectors 120, 140 is 4ns.

The detectors 120, 140 are connected to a computer system 160. The computer system 160 may be a computer or the like. The computer system 160 may be connected to the detectors 120, 140 by a wired connection or a wireless connection.

Each of the first and second detectors 120, 140 may have its own computer system 160. The computer system 160 is configured to receive an output from the first and second detectors 120, 140. The computer system 160 is also configured to control the first and second detectors 120, 140. For example, the computer system 160 is connected to the first and second detectors 120, 140 by an ethernet cable.

The computer system 160 may comprise, for example, a processing unit and a memory. The memory can be a non-transitory computer-readable medium operable for storing executable instructions that can be retrieved by the processor and executed by the processor. The executable instructions correspond to the various control techniques and processes described herein. The computer system 160 may also be an electronic processor or controller and the terms are used interchangeably herein.

The positioning of the detectors 120, 140 affects both system efficiency and energy resolution. Each successful event detection requires two separate particle detections, namely a gamma-ray and a neutron. Generally, the efficiency of two discrete detectors is lower than that of a single detector. To increase the efficiency, the first detector 120 is placed close to the source 110 without obscuring the second detector 140, this maximises the

$4\pi$ coverage and chances of a gamma detection. The second detector 140 is placed at a distance 150 that finds a balance between detection efficiency and a time of flight that results in a minimal cost factor for the resolution in the energy domain.

The first and second detectors 120, 140, or first and second scintillators, are coupled to a mixed field analyser (MFA). Each of the detectors 120, 140 may comprise an integral MFA or be connected to an external MFA. The MFA may form part of the computer system 160.

The MFA provides fast pulse digitisation via an integrated circuit, such as a field-programmable gate array (FPGA) based hardware. Therefore, the first and second detectors 120, 140 may perform gamma-ray/neutron discrimination on board and in real-time via a pulse gradient analysis method. In use, two parameters are taken from the digitised pulse - the normalised amplitude, and a normalised sample from the falling edge of the pulse. The comparison of these two values allows for particle discrimination.

Prior to measurements being made, the vertices of the line separating neutron and gamma events are placed, providing the discrimination parameters, and ensuring optimal particle discrimination.

The MFA runs a data processing firmware that provides timing capabilities and logic between the first and second detectors 120, 140. The MFA allows for a single clock signal for the digitalisation and timing of pulses on both the first and second detectors 120, 140. This allows for accurate timing between the first and second detectors 120, 140 with a resolution of 4ns. The detection of a gamma-ray by the first detector 120 triggers the start of the predetermined time window, or coincidence window. The time window may be set by a user.

For example, when an event is detected at the first detector 120 (i.e. a gamma-ray is detected due to a fission event of the source 110), the time window, or coincidence window, commences. An event detected at the second detector 140 within the time window is registered as a coincidence event. The time separation of the two pulses is received, or calculated, by the computer system 160.

Using the onboard particle discrimination of the MFA, the system can be filtered to only record certain events, for example, gamma-neutron coincidences or neutron-neutron coincidences.

In use, data is collected by the first and second detectors 120, 140 for between 1 hour and 100 hours. More preferably, data is collected for between 5 hours and 70 hours. Most preferably, data is collected for approximately 15 hours.

In some examples, the source 110 is a Californium 252 (252Cf) source. In other examples, the source 110 is a Curium 244 (244Cm) source. The system 100 may be arranged such that it is suitable for use with a variety of fission sources.

To accurately evaluate the measured neutron spectrum, the detector efficiency will advantageously be known. The detector efficiency varies with neutron energy. To produce the efficiency data, the source 110 is replaced with a source producing mono-energetic neutrons. Three different energy neutron sources are used, for example, 0.7MeV, 0.85MeV and 1MeV. Measurements are taken by the detectors with these different sources along with scattering measurements. This provided the means of calculating the detector efficiency at these energies. The data points are used in conjunction with data from existing datasets, such as Pino (F. Pino, L. Stevanato, D. Cester, G. Nebbia, L. Sajo-Bohus and G. Viesti, "The light output and the detection efficiency of the liquid scintillator EJ-309," Applied Radiation and Isotopes, vol. 89, 2014).

Curves may be fitted to the data from the calibration measurements and the data from Pino by using a lognormal function, as per Equation 1 below.

$$y = \frac{1}{x\sigma} exp - \left( \frac{lnx - \mu}{2\sigma^2} \right)$$

*Equation 1*

The distribution may be modified with an x offset to account for the null responses at neutron energies of below 500keV and a scaling factor. The curves may be fitted to the Pino data using a least-squares fitting algorithm to find the four coefficients to best describe the data. A linear interpolation calculation may then be used to find the fitting coefficients that best fit the gathered data. This provides an efficient function to use across the full energy range of the scintillator 120, 140 at the correct threshold value.

In summary, a user may perform on the fly time of flight neutron spectroscopy (1000). Firstly, a user may position the first detector 120 at a first distance 130 from the fission source 110, the first detector 120 configured to detect a gamma-ray emitted from the fission source 110 (step 1020). Next, the user may position the second detector 140 at a second distance 150 from the fission source 110, the second detector 140 configured to detect a neutron emitted from the fission source 110 (step 1040). The first detector 120 and second detector 140 are connected to the computer system 160. The computer system 160 is configured to: upon detection of a gamma-ray at the first detector 120, trigger the start of the pre-determined coincidence window (step 1050); upon detection of a neutron at the second detector 140 within the coincidence window, record the gamma-ray detection and the neutron detection as a coincidence event (step 1060); from the time between the detections in the coincidence event, determine the time-of-flight of the detected neutron (step 1070); and from the time-of-flight of the detected neutron, determine the energy of the detected neutron (step 1080).

The time of flight neutron spectroscopy system 100 provides a small, portable system. The time of flight neutron spectroscopy system 100 further provides a 'plug-and-play' system that may setup and operated by a user without significant spectroscopy knowledge.

The system 100 may be used to confirm a known source 110, or to detect an unknown source 110. In either case, the system 100 will reveal any contaminants in the source 100.

At least some of the example embodiments described herein may be constructed, partially or wholly, using dedicated special-purpose hardware. Terms such as 'component', 'module' or 'unit' used herein may include, but are not limited to, a hardware device, such as circuitry in the form of discrete or integrated components, a Field Programmable Gate Array (FPGA) or Application Specific Integrated Circuit (ASIC), which performs certain tasks or provides the associated functionality. In some embodiments, the described elements may be configured to reside on a tangible, persistent, addressable storage medium and may be configured to execute on one or more processors. These functional elements may in some embodiments include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. Although the example embodiments have been described with reference to the components, modules and units discussed herein, such functional elements may be combined into fewer elements or separated into additional elements. Various combinations of optional features have been described herein, and it will be appreciated that described features may be combined in any suitable combination. In particular, the features of any one example embodiment may be combined with features of any other embodiment, as appropriate, except where such combinations are mutually exclusive. Throughout this specification, the term "comprising" or "comprises" means including the component(s) specified but not to the exclusion of the presence of others.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A portable time of flight neutron spectroscopy system comprising:

    a first detector adapted to be positioned at a first distance from a fission source, configured to detect a gamma-ray emitted from the fission source;
    a second detector adapted to be positioned at a second distance from the fission source, configured to detect a neutron emitted from the fission source; and
    a computer system coupled to the first and second detectors, configured to:

        - upon detection of a gamma-ray at the first detector, record the time of the event and trigger the start of a pre-determined time window,
        - upon detection of a neutron at the second detector within the time window, record the time of the event and record the gamma-ray detection and the neutron detection as a coincidence event, and
        - using the time difference between the detections of the gamma-ray and the neutron in the coincidence event, determine the time-of-flight of the detected neutron,
        - using the time-of-flight of the detected neutron, determine the energy of the detected neutron.

2. The system according to claim 1, wherein the time window is between 60ns and 250ns.

3. The system according to claim 1 or claim 2, wherein the first and second detectors are liquid scintillator detectors and/or solid-state scintillator detectors.

4. The system according to claim 3, wherein the first detector is a solid-state scintillator detector.

5. The system according to claim 3 or claim 4, wherein the second detector is a liquid scintillator detector.

**6.** The system according to any preceding claim, wherein the first distance is between 10mm and 400mm.

**7.** The system according to any preceding claim, wherein the second distance is between 300mm and 1200mm.

**8.** The system according to any preceding claim, wherein the angle $\alpha_1$, of the first detector 120 is between 5 and 70 degrees.

**9.** The system according to any preceding claim, wherein the angle $\alpha_2$, of the second detector 140 is between 5 and 50 degrees.

**10.** The system according to any preceding claim, wherein the computer system further comprises at least one mixed field analyser coupled to the first and second detectors.

**11.** The system according to claim 10 wherein the computer system further comprises a field-programmable gate array, such that the mixed field analyser provides fast pulse digitisation via the field-programmable gate array.

**12.** The system according to any preceding claim, wherein the computer system is configured to record multiple gamma-ray detections and neutron detections as multiple coincidence events.

**13.** The system according to claim 12, wherein the computer system is further configured to use the multiple coincidence events to produce an energy spectrum.

**14.** A method of performing on the fly time of flight neutron spectroscopy, the method comprising:

detecting a gamma-ray emitted from a fission source with a first detector located at a first distance from the fission source;
detecting a neutron emitted from the fission source with a second detector located at a second distance from the fission source;
wherein the first and second detectors are coupled to a computer system, the computer system configured to:

- upon detection of a gamma-ray at the first detector, trigger the start of a pre-determined time window,
- upon detection of a neutron at the second detector within the coincidence window, record the gamma-ray detection and the neutron detection as a coincidence event,
- from the time between the detections in the coincidence event, determine the time-of-flight of the detected neutron, and
- from the time-of-flight of the detected neutron, determine the energy of the detected neutron.

1000

```
┌─────────────────────┐
│        1020         │
└─────────────────────┘
           │
           ▼
┌─────────────────────┐
│        1040         │
└─────────────────────┘
           │
           ▼
┌─────────────────────┐
│        1050         │
└─────────────────────┘
           │
           ▼
┌─────────────────────┐
│        1060         │
└─────────────────────┘
           │
           ▼
┌─────────────────────┐
│        1070         │
└─────────────────────┘
           │
           ▼
┌─────────────────────┐
│        1080         │
└─────────────────────┘
```

Fig.2

Fig.1

## EUROPEAN SEARCH REPORT

**Application Number**

EP 22 27 5066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Grievson Alexander James: "Time-of-flight spectrometry of the spontaneous fission neutron emission from 244 Cm and 252 Cf using EJ-309 liquid scintillators", , 31 January 2020 (2020-01-31), pages 1-178, XP055972231, Retrieved from the Internet: URL:https://eprints.lancs.ac.uk/id/eprint/145381/1/2020grievsonphd.pdf [retrieved on 2022-10-18] * abstract * * figures 26, 27, 35, 36, 38, 57 * * table 2 * * page 51, last full paragraph * * page 53, section 3.1 * * page 56, section 3.1.1.1 * * section 3.1.2 * * page 71, first paragraph * * page 94, section 3.3.4.1 * * paragraph bridging pages 127 and 128 * ----- -/-- | 1-3,5-14 | INV. G01T3/00 |

TECHNICAL FIELDS SEARCHED (IPC)

G01T

The present search report has been drawn up for all claims

| Place of search | Date of completion of the search | Examiner |
|---|---|---|
| The Hague | 31 October 2022 | Santen, Nicole |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 27 5066

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GRIEVSON ALEX ET AL: "Time-of-Flight Spectroscopy of 252Cf Spontaneous Fission Neutrons: Influences of Detector Voltage, Pulse-Shape Discrimination and Shielding", 2020 IEEE NUCLEAR SCIENCE SYMPOSIUM AND MEDICAL IMAGING CONFERENCE (NSS/MIC), IEEE, 31 October 2020 (2020-10-31), pages 1-4, XP033958981, DOI: 10.1109/NSS/MIC42677.2020.9507768 [retrieved on 2021-08-04] * abstract * * figure 1 * * section II. Method, first and second paragraph * * section I. Introduction, second paragraph * * section IV. Discussion, lines 1-9 * * section V. Conclusions, lines 1-5 * ----- | 1-3, 5-11,14 | |
| X | BOURNE MARK M ET AL: "SiPM-based compact time-of-flight detector for neutron spectrometry of fission samples", NUCLEAR INSTRUMENTS & METHODS IN PHYSICS RESEARCH. SECTION A, ELSEVIER BV * NORTH-HOLLAND, NL, vol. 954, 26 March 2019 (2019-03-26), XP085992856, ISSN: 0168-9002, DOI: 10.1016/J.NIMA.2019.03.055 [retrieved on 2019-03-26] * abstract * * figures 3-5 * * section 2.2 * * section 3.1 * * section 3.2 * * section 4 * ----- | 1,3,4,7, 14 | **TECHNICAL FIELDS SEARCHED (IPC)** |

The present search report has been drawn up for all claims

| Place of search | Date of completion of the search | Examiner |
|---|---|---|
| The Hague | 31 October 2022 | Santen, Nicole |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. PINO ; L. STEVANATO ; D. CESTER ; G. NEBBIA ; L. SAJO-BOHUS ; G. VIESTI.** The light output and the detection efficiency of the liquid scintillator EJ-309. *Applied Radiation and Isotopes,* 2014, vol. 89